# EUROPEAN PATENT APPLICATION

(11) **EP 4 506 520 A1**
(43) Date of publication of application: **12.02.2025**
(21) Application number: 24192133.7
(22) Date of filing: 31.07.2024
(51) Int. Cl.: E04C 5/16, F16B 7/18, F16B 31/02, E04C 5/03

(54) **COUPLER AND COUPLING METHOD**

(30) Priority: 10.08.2023 AU 2023902546; 15.07.2024 AU 2024204858
(71) Applicant: Illinois Tool Works Inc., Glenview IL 60025 (US)
(72) Inventor: FERRIER, Ian Ross, Glenview, P384591EP (US); KNUDTZEN, Anders, Glenview, 60025 (US)
(74) Representative: HGF

(57) **Abstract**

A coupler including:
a first fitting for mounting to a first externally threaded reinforcing bar for use in concrete construction, the first fitting comprising a first body having a first internal thread for threadedly inserting the first externally threaded reinforcing bar into the first fitting;
the first fitting having a second internal thread having a pitch finer than a pitch of the first internal thread; and
a plug for threading into the second internal thread for abutting an end of said threaded reinforcing bar.

## Description

### Field of the Invention

The present invention relates to a coupler including a threaded connecting device and to a method of coupling threaded reinforcing bars to form a mechanical connection as may be used in concrete construction.

### Background to the Invention

One form of reinforcing bar used in concrete construction incorporates a continuous coarse external thread. The thread not only acts to form a key between the bar and concrete, it also enables a range of supplementary fittings easily to be applied to the bar by engagement of a mating thread with that of the bar. One such threaded reinforcing bar is marketed under the trade mark "Reidbar" by the Ramsetreid division of ITW Australia Pty Ltd., a related entity of the present applicant. The thread on the Reidbar bar is quite coarse and its pitch ranges from 8 mm for a bar of 12 mm diameter to around 16.5 mm for a bar diameter of 32 mm.

Internally threaded fittings for mounting over the end of threaded reinforcing bar for example for coupling lengths of bar in series tend, principally for cost considerations, to be of cast construction, cast iron predominantly, with the internal thread being formed during casting by a sand core. The internal thread formed in this way is not formed to the degree of accuracy which would be expected from a conventionally tapped thread and, moreover, the external thread on the bar itself is not formed to a particularly high degree of accuracy. A consequence of this is that there may not be a particularly tight engagement between the fitting and the bar and some slippage can occur between the bar and the fitting when high loads are applied.

Slippage of a coupler on a threaded reinforcing bar can have serious consequences and relevant construction standards require that slip be limited and controlled. This can be difficult to achieve given the large tolerances involved in manufacturing coarse threaded bar. While slippage can be avoided by filling the interior of the coupler with an epoxy cement, this measure adds to the time and cost of installing the coupler to the bar as well as not being accepted as a solution by certain construction authorities. Other methods include machining metric threads or swaging sleeves onto the ends of the bar. These are time-consuming, complex and expensive due to the processes and equipment required. Accordingly, it is desirable to provide a coupler that can accommodate the loose tolerances of the reinforcing bar and minimise slip of the coupler along the reinforcing bar to within the required standard.

The applicant has also determined that existing methods and devices do not permit installation in some circumstances where rotation of the reinforcing bars is not possible and/or where a gap has to be bridged between the two elements. It has been determined that it would be advantageous for there to be provided a coupler which enables coupling between reinforcing bars where rotation of the reinforcing bars is prevented or at least restricted, and which provides bridging of a gap between the reinforcing bars to be coupled.

### Summary of the Invention

In accordance with the present invention, there is provided a coupler including:
a first fitting for mounting to a first externally threaded reinforcing bar for use in concrete construction, the first fitting comprising a first body having a first internal thread for threadedly inserting the first externally threaded reinforcing bar into the first fitting;
the first fitting having a second internal thread having a pitch finer than a pitch of the first internal thread; and
a plug for threading into the second internal thread for abutting an end of said threaded reinforcing bar.

Preferably, the plug is adapted for being tightened in said second internal thread for applying a preload against said end of said threaded reinforcing bar. More preferably, the plug is frangible at a predetermined torque which ensures a correct preload amount. Even more preferably, the plug includes an engagement formation for rotating the plug relative to the first fitting and wherein the engagement formation is frangibly connected to a remainder of the plug.

In a preferred form, the plug has an external thread corresponding to said second internal thread of the first fitting.

Preferably, the plug includes a stop to ensure a correct depth of insertion of the plug relative to the first fitting to allow for insertion of the threaded reinforcing bar prior to tightening the plug for applying said preload. Alternatively, the stop might not have to be on the plug, as an example could be configured in a way where it is not determined on which component(s) the stop is located. Also, the stop may be frangible as well, to be 'overcome' to generate the preload.

Preferably, the coupler further includes:
a second fitting for mounting to a second externally threaded reinforcing bar for use in concrete construction, the second fitting comprising a second body having a first internal thread for threadedly inserting the second externally threaded reinforcing bar into the second fitting;
the second fitting having a second internal thread having a pitch finer than the pitch of the first internal thread; and
a second plug for threading into the second internal thread for abutting the end of said second externally threaded reinforcing bar.

Preferably, the second fitting is adapted for threaded connection with the first fitting. More preferably, the second fitting provides a male thread, the first fitting provides a female thread, and the male thread is able to be connected to the female thread.

Alternatively, the first fitting provides a first female thread, the second fitting provides a second female thread, and the coupler further includes a male threaded stub having a first end for connecting to the first female thread and a second end for connecting to the second female thread.

It will be appreciated by those skilled in the art that, although the preload principle may be used to connect two bars, other items, such as anchors or threaded connection to steel structures, could be connected to one bar in other applications.

### Brief Description of the Drawings

The invention is described, by way of non-limiting example only, with reference to the accompanying drawings in which:
**Figure 1** shows a coupler in accordance with a first example of the present invention;
**Figure 2** shows a coupler in accordance with a second example of the present invention;
**Figure 3** shows the coupler of Figures 1 and 2 prior to installation;
**Figure 4** shows first and second example couplers connected, as well as the coupler of Figure 2 shown prior to applying installation;
**Figure 5** shows a perspective view of the couplers shown in Figure 4; and
**Figure 6** shows a table including example thread pitch ranges and values.

### Detailed Description

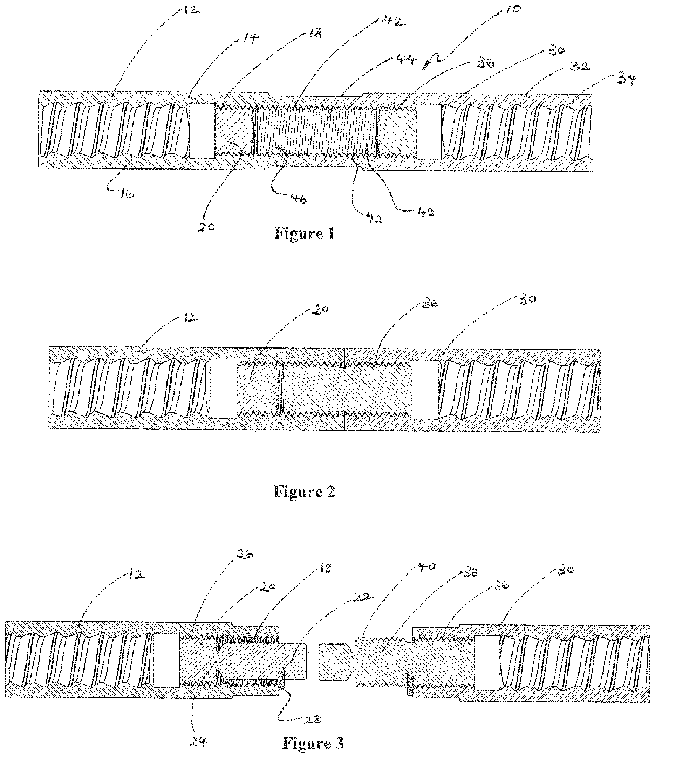

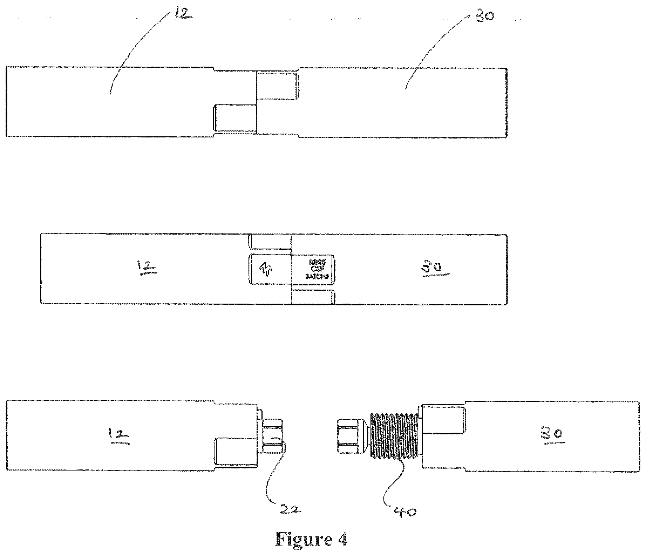

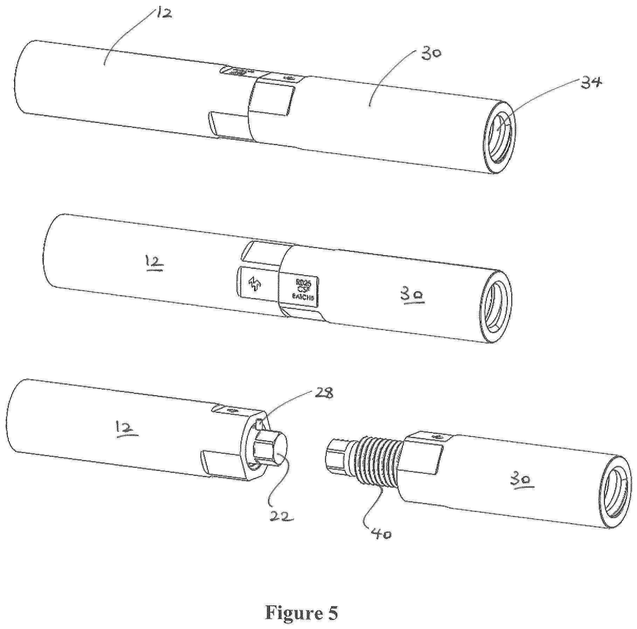

With reference to Figures 1 to 6, there is shown a coupler 10 including a first fitting 12 for mounting to a first externally threaded reinforcing bar for use in concrete construction. The first fitting 12 comprises a first body 14 having a first internal thread 16 for threadedly inserting the first externally threaded reinforcing bar into the first fitting 12. The first fitting 12 also has a second internal thread 18 having a pitch finer than the pitch of the first internal thread 16.

The coupler 10 also includes a plug 20 for threading into the second internal thread 18 for abutting the end of said threaded reinforcing bar.

The plug 20 is adapted for being tightened in said second internal thread for applying a preload against said end of said threaded reinforcing bar. The plug 20 is frangible at frangible connection 24 to ensure a correct preload amount. As can be seen in Figure 3, the plug 20 includes an engagement formation 22 for rotating the plug 20 relative to the first fitting 12 and the engagement formation 22 is frangibly connected, by way of a frangible connection 24, to a remainder of the plug 20.

The plug 20 has an external thread 26 corresponding to the second internal thread 18 of the first fitting 12.

The plug 20 includes a stop 28 to ensure a correct depth of insertion of the plug 20 relative to the first fitting 12 to allow for insertion of the threaded reinforcing bar prior to tightening the plug 20 for applying the preload. The stop 28 ensures the correct position and ensures transfer of torque required to install the first fitting 12 onto the threaded reinforcement bar.

In the examples shown in the drawings, the coupler 10 further includes a second fitting 30 for mounting to a second externally threaded reinforcing bar for use in concrete construction. The second fitting 30 comprises a second body 32 having a first internal thread 34 for threadedly inserting the second externally threaded reinforcing bar into the second fitting 30. The second fitting 30 has a second internal thread 36 having a pitch finer than a pitch of the first internal thread 34. The second fitting 30 also includes a second plug 38 for threading into the second internal thread 36 for abutting an end of the second externally threaded reinforcing bar.

The second fitting 30 is adapted for threaded connection with the first fitting 12. In one example, the second fitting 30 provides a male thread 40 (see Figure 2 and Figure 3), the first fitting 12 provides a female thread 42, and the male thread 40 is able to be connected to the female thread 42 as shown in the cross-sectional view of Figure 2.

Alternatively, in another example as shown in Figure 1, the first fitting 12 provides a first female thread 42, the second fitting 30 provides a second female thread 42, and the coupler 10 further includes a male threaded stub 44 having a first end 46 for connecting to the first female thread 42 and a second end 48 for connecting to the second female thread 42.

### Example

Figures 1 and 2 show two different embodiments of the concept - starting with the `top level' assembly and then the couplers themselves. A short description of each image follows below:
1. Figure 1 is a coupler where the RH and LH coupler are identical assemblies, i.e. a `female coupler' installed on the Reidbar. The two halves of the coupling system are then connected with a stub 44 in the form of a length of threaded rod. This has the advantage that only one coupler type will be installed on the Reidbar independent of which side of the coupling system the bar will be used. However, in this layout both the RH and LH side coupler have to include enough `fine thread' length to support both a `preload plug' and the actual load-carrying threaded piece.
2. Figure 2 shows a layout where there is a 'female' and 'male' coupler. This avoids the need for the threaded rod to connect the two halves and it reduces the overall length because it saves the thread length required for the `preload plug' in the male half of the coupler. It does however result in the LH and RH couplers being different assemblies.
3. The bottom LH side of Figure 3 shows a `female coupler'.
4. The bottom RH side of Figure 3 shows a `male coupler'.

Advantageously, these coupler layouts provide that preload on the Reidbar reinforcing bar is generated by a `fine pitch' thread rather than the coarser Reidbar thread. In the condition where the preload is generated, i.e. when the 'plug' (the green items in Figures 1 to 3) is in contact with the Reidbar (not shown) this is achieved by the pitch difference between the two threads: If, when all components are in contact, a torque is applied to the 'plug', and with the Reidbar fixed, then the torque will be transferred from the 'plug' to the Reidbar through two paths: (a). A component will go through the contact region between the plug and the end face of the Reidbar. This torque will depend on friction, load and contact geometry. (b). A component will be transferred through the 'plug' thread into the coupler sleeve, and through the sleeve to the Reidbar thread interface. As such, the Reidbar thread and the 'plug' thread will be subject to equal torques. Due to the pitch difference between the two threads, movement will preferentially be in the fine thread and, as such, the load achieved in the joint will be a result of the mechanical advantage of the fine thread rather than the Reidbar thread.

During installation of the couplers onto the bar, before the 'plug' and Reidbar end faces make contact, control of the plug position and transfer of torque to the coupler sleeve is required. This can be implemented in a multitude of ways. Figure 3 shows a stop in the form of a pin contacting the end face of the coupler sleeve. A suitably dimensioned pin will allow sufficient torque transfer to allow the sleeve being screwed onto the Reidbar without the 'plug' and coupler sleeve rotating relative to each other. When the 'plug' contacts the Reidbar and the load, and as a result torque, increase the pin will deflect and the 'plug' will rotate relative to the sleeve. This same effect could be achieved in other ways, for example: `Low strength' thread locking adhesive (Loctite) on the 'plug' thread or a shoulder with a wave-washer creating a flexible joint between the 'plug' and the sleeve.

The steps of installation are outlined below.

| | |
|---|---|
| Step one: | Screw Reidbar into coupler until it comes to bear up against internal shoulder. |
| Step two: | While supporting the coupler from rotating, torque the plug until it shears off. |
| On site: | Connect two female couplers fitted to Reidbar with a male threaded stub and tighten joint. |

The above steps referred to the installation if the stop described on page 6 is not present. With this stop present, the installation steps are as follows:
1. Fix Reidbar to prevent rotation.
2. Start coupler onto Reidbar thread.
3. Apply torque onto the 'plug' (Figure 3, reference numeral 20) until section 24 shears off.

As will be appreciated from the above, examples of the present invention achieves a low torque solution by changing the preload thread from the reinforcing bar rolled thread to a finer pitch machined thread. The reduced torques required dramatically improves ease of installation, reduces the cost of tools required to install the coupler and allows in-situ installation on Reidbar.

In one embodiment, shown in Figure 1, the two fittings in the coupler assembly are identical. The fitting has a plug (shown in green in Figures 1 to 5) screwed into the fine thread until it reaches a stop defined by the pin - this is the state in which the coupler is delivered to the customer.

In an example, the coupler assembly onto the Reidbar is as follows: Screw coupler onto Reidbar by hand until stop is reached, then tighten hex until frangible section shears. Torque applied to the hex will initially be transferred through the stop (pin) to ensure that the coupler is fully engaged on the bar. At a predetermined torque, the stop shears and the plug will rotate in the fine thread and preload the bar. The frangible section will shear when the assembly is correctly preloaded. This implementation facilitates a large reduction in required torque - in one particular embodiment, the torque required to achieve correct preloading fell from around 850 Nm to around 200 Nm.

When assembling on site, the male threaded stub is screwed into one or the other fitting and the two are screwed together until the end faces contact.

Positives:
- torque accuracy is better since the frangible section is solid.
- torque requirement is lower than couplers driven by the reinforcement bar thread, about 1/5^{th}.
- only one bar assembly process and socket size is required for each bar size.
- easier manufacturing than at least one previously proposed solution due to reduced internal geometry complexity.

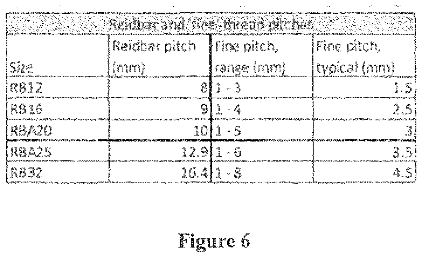

Figure 6 shows a range of thread pitch for the fine thread as well as a typical value for the thread pitch of the fine thread, for each of the different Reidbar reinforcing bar sizes. In determining these ranges, in particular the lower end, consideration was given to the environment in which the couplers will be used and typical contaminants and handling patterns in such environments. A very fine pitch, for example below 1 mm, may be excessively sensitive to dirt, grit and rough handling. A very coarse thread may require increased torques and may therefore reduce the advantage gained from the present invention. The tabulated values are considered to be the best known at this stage and may possibly be subject to change.

While various embodiments of the present invention have been described above, it should be understood that they have been presented by way of example only, and not by way of limitation. It will be apparent to a person skilled in the relevant art that various changes in form and detail can be made therein without departing from the spirit and scope of the invention. Thus, the present invention should not be limited by any of the above described exemplary embodiments.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

### List of Reference Numerals

- 10: Coupler
- 12: First fitting
- 14: First body
- 16: First internal thread
- 18: Second internal thread
- 20: Plug
- 22: Engagement formation
- 24: Frangible connection
- 26: External thread
- 28: Stop
- 30: Second fitting
- 32: Second body
- 34: First internal thread
- 36: Second internal thread
- 38: Second plug
- 40: Male thread
- 42: Female thread
- 44: Male threaded stub
- 46: First end
- 48: Second end

## Claims

1. A coupler including:
a first fitting for mounting to a first externally threaded reinforcing bar for use in concrete construction, the first fitting comprising a first body having a first internal thread for threadedly inserting the first externally threaded reinforcing bar into the first fitting;
the first fitting having a second internal thread having a pitch finer than a pitch of the first internal thread; and
a plug for threading into the second internal thread for abutting an end of said threaded reinforcing bar.

2. A coupler as claimed in claim 1, wherein the plug is adapted for being tightened in said second internal thread for applying a preload against said end of said threaded reinforcing bar.

3. A coupler as claimed in claim 2, wherein the plug is frangible to ensure a correct preload amount.

4. A coupler as claimed in claim 2 or 3, wherein the plug includes an engagement formation for rotating the plug relative to the first fitting and wherein the engagement formation is frangibly connected to a remainder of the plug.

5. A coupler as claimed in any one of claims 1 to 4, wherein the plug has an external thread corresponding to said second internal thread of the first fitting.

6. A coupler as claimed in any one of claims 1 to 5, wherein the plug includes a stop to ensure a correct depth of insertion of the plug relative to the first fitting to allow for insertion of the threaded reinforcing bar prior to tightening the plug for applying said preload.

7. A coupler as claimed in any one of claims 1 to 6, wherein the coupler includes:
a second fitting for mounting to a second externally threaded reinforcing bar for use in concrete construction, the second fitting comprising a second body having a first internal thread for threadedly inserting the second externally threaded reinforcing bar into the second fitting;
the second fitting having a second internal thread having a pitch finer than a pitch of the first internal thread; and
a second plug for threading into the second internal thread for abutting an end of said second externally threaded reinforcing bar.

8. A coupler as claimed in claim 7, wherein the second fitting is adapted for threaded connection with the first fitting.

9. A coupler as claimed in claim 8, wherein the second fitting provides a male thread, the first fitting provides a female thread, and the male thread is able to be connected to the female thread.

10. A coupler as claimed in claim 8, wherein the first fitting provides a first female thread, the second fitting provides a second female thread, and the coupler further includes a male threaded stub having a first end for connecting to the first female thread and a second end for connecting to the second female thread.

11. A method of coupling threaded reinforcing bar including the step of using a coupler as claimed in any one of claims 1 to 10.

12. A coupling method including the steps of:
providing a first fitting comprising a first body having a first internal thread and a second internal thread having a pitch finer than a pitch of the first internal thread;
mounting the first fitting to a first externally threaded reinforcing bar for use in concrete construction, including the step of threadedly inserting the first externally threaded reinforcing bar into said first internal thread; and
threading a plug into the second internal thread to abut an end of said threaded reinforcing bar.
